# EUROPÄISCHE PATENTSCHRIFT

(11) **EP 1 270 357 B1**
(45) Veröffentlichungstag und Bekanntmachung des Hinweises auf die Patenterteilung: **10.05.2006**
(21) Anmeldenummer: 02012425.1
(22) Anmeldetag: 10.06.2002
(51) Int. Cl.: B60T 17/08, B60T 13/38, B60T 13/22, F16D 65/14

(54) **Federspeicherkolben**
Spring accumulator piston
Piston à ressort accumulateur

(30) Priorität: 25.06.2001 DE 10130542
(43) Veröffentlichungstag der Anmeldung: 02.01.2003
(73) Patentinhaber: KNORR-BREMSE SYSTEME FÜR NUTZFAHRZEUGE GMBH, 80809 München (DE)
(72) Erfinder: Gravier, Damien, 81476 München (DE)

(56) Entgegenhaltungen:
- EP-A- 0 480 148
- WO-A-97/18117
- DE-A- 2 931 360
- DE-A- 3 727 355
- DE-A- 19 725 240
- DE-B- 2 631 023
- US-A- 4 056 043

## Beschreibung

Die vorliegende Erfindung betrifft einen Federspeicherkolben für Federspeicherbremszylinder, insbesondere von Nutzfahrzeugen, nach Anspruch 1.

Aus der Praxis sind Betriebsbrems-, Federspeicherbrems-, sowie häufig als Kombizylinder bezeichnete kombinierte Betriebsbrems- und Federspeicherbremszylinder bekannt. Derartige Bremszylinder dienen zur Betätigung von Bremsanlagen von Fahrzeugen, insbesondere von Nutzfahrzeugen. Bei den aus der Praxis bekannten, reinen Federspeicherbremszylindern wirkt eine vorgespannte Speicherfeder über einen Federspeicherkolben auf eine Kolbenstange, so dass im Einsatzfall eine Bremse betätigt werden kann. Der Betriebsbremsteil eines Betriebsbremszylinders oder auch eines Kombizylinders enthält bei den aus der Praxis bekannten Bremszylindern im allgemeinen eine durch Druckluft beaufschlagbare Membran, welche gegenüber einem Teller und einem mit dem Teller verbundenen Betätigungsstössel wirkt. Bei einem Kombizylinder ist der Federspeicherbremsteil dem Betriebsbremsteil aufgesattelt. Ein solcher aufgesattelter Federspeicherbremsteil ist beispielsweise in der DE 198 30 154 A1 beschrieben. Hier wirkt eine Kolbenstange des Federspeicherbremsteils, welche mit dem Federspeicherkolben verbunden ist, bei Betätigung durch die Speicherfeder auf die Membran des Betriebsbremszylinders ein und überträgt mittels des Tellers des Betriebsbremszylinders die Federspeicherbremskraft auf den Betätigungsstössel. Die Speicherfeder wird hierfür zuvor gespannt, wenn die Federspeicherkammer mit Druckluft beaufschlagt wird.

Derartige Federspeicherbremszylinder weisen einen aus Aluminium oder Zink gegossenen Federspeicherkolben auf. Diese Gussteile haben jedoch den wesentlichen Nachteil, dass nach dem Gießen regelmäßig Nachbearbeitungsschritte zur Entfernung von etwaigen Graten oder zur Vergleichmäßigung von Oberflächen notwendig sind. Ferner müssen häufig benötigte Bohrungen für Befestigungsmittel beispielsweise spanabhebend eingebracht oder Sitzflächen für Dichtungs- oder Gleitringe oder dergleichen eingearbeitet werden. Darüber hinaus haben diese aus Aluminium oder Zink hergestellten Federspeicherkolben den Nachteil, dass sie aufgrund von nicht gänzlich vermeidbarer Feuchtigkeit Korrosion oder ähnlichen Alterungsprozessen ausgesetzt sind, die schlussendlich zu Fehlfunktionen führen können. Zuletzt ist die Herstellung von Federspeicherkolben als Aluminium- oder Zinkgussteil relativ teuer, wobei weiter nachteilig hinzukommt, dass die Gussformen einem hohen Verschleiß unterworfen und damit nur begrenzte Stückzahlen herstellbar sind.

Weiter nachteilig ist bei den aus der Praxis bekannten Federspeicherkolben aus Aluminium oder Zinkguss, dass nur begrenzte Kräfte von der Speicherfeder in den Federspeicherkolben eingeleitet und von diesem auf einen Kolben oder eine Kolbenstange übertragen werden können, da Aluminium- bzw. Zinkgussteile bekanntermaßen nur begrenzt auf Zug belastbar sind.

Die gattungsgemäße DE 2 631 023 A1 offenbart einen Federspeicherkolben für einen Federspeicherbremszylinder, welcher aus Kunststoff hergestellt ist. Bei einem in einem Federspeicherzylinder geführten Federspeicherkolben wird die Bremskraft allein über eine am Federspeicherkolben abgestützte Speicherfeder erzeugt. Der Federspeicherkolben wird gelöst, indem eine Druckhammer im Federspeicherkolben belüftet, und die Speicherfeder dadurch komprimiert wird.

Der vorliegenden Erfindung liegt demgegenüber die Aufgabe zugrunde, einen Federspeicherkolben der oben erwähnten Art derart weiter zu entwickeln, dass höhere Kräfte als bisher von der Speicherfeder in den Federspeicherkolben eingeleitet und von diesem auf die Kolbenstange übertragen oder bei gleich bleibenden Kräften die Wandungsstärke des Federspeicherkolbens verringert werden kann.

Gemäß der Erfindung wird dies dadurch realisiert, dass eine Einlage aus Stahl in die Wandung des Federspeicherkolbens eingeformt ist.

Der erfindungsgemäße Federspeicherkolben verfügt daher über eine Einlage, die mit in die Wandung bzw. in Wandungsabschnitte des Federspeicherkolbens eingeformt ist, und die aus Stahl hergestellt ist. Diese Verstärkungseinlage bzw. Stahleinlage ist weitestgehend in der aus Kunststoff hergestellten Wandung des Federspeicherkolbens integriert und damit vom Kunststoff umhüllt. Die Stahleinlage dient dabei in vorteilhafter Weise zur verstärkten Übertragung der von der Speicherfeder in den Federspeicherkolben eingeleiteten Kraft zu dessen Überleitungsbereich zur Ein- bzw. Überleitung in die Kolbenstange, wobei die Stahleinlage nach deren mechanischen Belastungen optimal ausgelegt werden kann. Ferner bietet eine solche Verstärkungseinlage bzw. Stahleinlage den Vorteil, dass die Wandungsstärke von auf Zug belasteten Wandungsabschnitten des erfindungsgemäßen Federspeicherkolbens gegenüber herkömmlichen aus Aluminium oder Zinkguss hergestellten Federspeicherkolben deutlich geringer gehalten werden kann.

Die mit diesen Maßnahmen erzielbaren Vorteile sind weiterhin darin zu sehen, dass ein in allen Richtungen wirksamer Formschluss zwischen dem Kunststoff und der Stahleinlage entsteht, welche besondere Vorteile hinsichtlich einer geringem Wandstärke in Verbindung mit einer hohen Steifigkeit mit sich bringt. Eine hohe Steifigkeit ist gerade bei Federspeicherkolben von Vorteil, da sich die Speicherfeder entlang einer relativ geringen Fläche, nämlich der letzten Federwindung am Federspeicherkolben abstützt und dieser dadurch leicht zu Verformung bzw. Verkantung im Federspeicherbremszylinder neigt.

Als Material zur Herstellung des Federspeicherkolbens wird Kunststoff ausgewählt. Dabei hat sich entgegen bestehender Vorurteile gegenüber Kunststoff als im Vergleich zu Aluminium oder Zink als für Federspeicherkolben unbrauchbar erachtetem Material in Tests überraschend gezeigt, dass mit einem Federspeicherkolben aus Kunststoff genauso gute Betriebseigenschaften erzielbar sind, wie bei herkömmlichen Federspeicherkolben. Weiterhin überraschend bleiben die damit erreichbaren Bremskräfte nicht hinter den mit herkömmlichen Federspeicherkolben erzielbaren Bremskräften zurück. Zudem liegt die Lebensdauererwartung eines Federspeicherkolbens aus Kunststoff wider Erwarten sogar über der Lebensdauererwartung eines herkömmlichen Federspeicherkolbens.

Indem ein Federspeicherkolben aus Kunststoff vorgeschlagen wird, der beispielsweise als Kunststoffspritzgussteil hergestellt werden kann, können in vorteilhafter Weise die mit einer Kunststoffspritzgussform zu verwirklichenden, deutlich höheren Stückzahlen zur Steigerung der Produktivität genutzt werden, wobei Steigerungsraten gegenüber dem herkömmlichen Aluminium- oder Zinkguss um das 10 bis 20-fache ohne zusätzlichen Aufwand realisierbar sind. Darüber hinaus kann bei einer Herstellung des Federspeicherkolbens aus Kunststoff eine aufwendige Nachbearbeitung in aller Regel entfallen. Kunststoffspritzgussteile haben von Haus aus glatte Oberflächen. Grate, die nachträglich aufwendig entfernt werden müssten, treten bei Kunststoffspritzgussteilen üblicherweise nicht auf. Damit können die Herstellungskosten eines Federspeicherkolbens aus Kunststoff gegenüber den Herstellungskosten von herkömmlichen, aus Aluminium oder Zink gegossenen Federspeicherkolben, deutlich gesenkt werden.

Darüber hinaus bietet die erstmalige Auswahl von Kunststoff als Material zur Herstellung eines erfindungsgemäßen Federspeicherkolbens den weiteren Vorteil, dass ein Federspeicherkolben aus Kunststoff keiner nennenswerten Alterung oder gar einer Art Korrosion aufgrund möglicherweise vorhandener Feuchtigkeit ausgesetzt ist.

Ferner bietet die Verwendung von Kunststoff zur Herstellung des Federspeicherkolbens den weiteren Vorteil einer deutlichen Gewichtsreduzierung gegenüber der Aluminium- oder Zinkgusstechnologie. Dies reduziert den Aufwand hinsichtlich der Handhabung bei der Herstellung eines als Spritzgussteil aus Kunststoff hergestellten Federspeicherkolbens und hilft die Transportkosten der hergestellten Teile aufgrund deren geringerer Maße zu senken.

Weiterhin bietet ein Federspeicherkolben aus Kunststoff den zusätzlichen Vorteil, dass Sitze für Gleitringe, Dichtungen oder dergleichen bereits nach der Herstellung eine ausreichend hohe Oberflächengüte und/oder Sitzgenauigkeit aufweisen, dass die gerade bei herkömmlichen Alu- oder Zinkgussteilen aufwendige Einarbeitung von solchen Sitzflächen für Gleitringe, Dichtungen oder dergleichen entfallen kann, was sich wiederum sowohl in einer reduzierten Bearbeitungszeit als auch in einer Kostensenkung widerspiegelt.

Nicht zuletzt ermöglicht die Herstellung des erfindungsgemäßen Federspeicherkolbens aus Kunststoff eine bemerkenswerte Lärmreduzierung bei der weiteren Verarbeitung desselben, da ein Hohlkörper aus Kunststoff entgegen einem metallischen Hohlkörper keinen nennenswerten Lärm produzieren kann. Dieser Umstand macht sich insbesondere bei den mit der Integration des Bremszylinders betrauten Arbeitern in einer Steigerung der Arbeitsplatzqualität bemerkbar.

Vorteilhafte Weiterbildungen der Erfindung ergeben sich aus den Merkmalen der Unteransprüche.

Gemäß einer bevorzugten Ausführungsform reicht die Einlage von einem Kolbentellerabschnitt, insbesondere von einem einer Anlagefläche einer Speicherfeder benachbarten Krafteinleitungsbereich in den Federspeicherkolben, bis zu einem in einem ringförmigen Kolbenzentrum angeordneten Kraftüberleitungsbereich vom Federspeicherkolben zu einem Kolben oder einer Kolbenstange. Dabei kann die Einlage in diesem Abschnitt beispielsweise vollflächig ringförmig umlaufen, sie kann aber auch als von einander beabstandete, radial verlaufende Streifen in den betreffenden Wandabschnitt eingebettet sein. Ebenso ist es denkbar, die Einlage ähnlich einer Krone mit einem Kranz und sich daran anschließenden Strahlen auszubilden und in die Wandung einzuformen.

In einer weiter bevorzugten Ausführungsform ist die Verstärkungseinlage im Krafteinleistungsbereich der Speicherfeder bogenförmig gekrümmt, verläuft dann relativ geradlinig oder unter einem geringen Winkel geneigt ringförmig koaxial zur Hauptachse X und knickt dann in einem oder mehreren Abschnitten ab zu einem im wesentlichen senkrecht zur Längsrichtung orientierten ringförmigen Endabschnitt an den die Kolbenstange zur Übernahme der Kraft anliegt. Dabei wird die Kolbenstange in bevorzugter Weise mittels einer entsprechenden Nase, die von innen in die Kolbenstange eingreift, in ihrer Lage zentriert. Hierfür weist die Einlage in einer bevorzugten Ausführungsform eine Schulter auf, an der das federspeicherkolbenseitige, radial innere Ende des Kolbens oder der Kolbenstange anliegt.

Die Erfindung wird nachfolgend anhand einer beispielhaften Ausführungsform unter Bezugnahme auf die Figuren der Zeichnung näher erläutert. Es zeigen:
- Fig. 1: eine dreidimensionale, aufgeschnittene Seitenansicht eines erfindungsgemäßen Federspeicherkolbens mit darin integrierter Kolbenstange, und
- Fig. 2: den mittleren Bereich des in Fig. 1 gezeigten Federspeicherkolbens in einer geschnittenen, vergrößerten Darstellung.

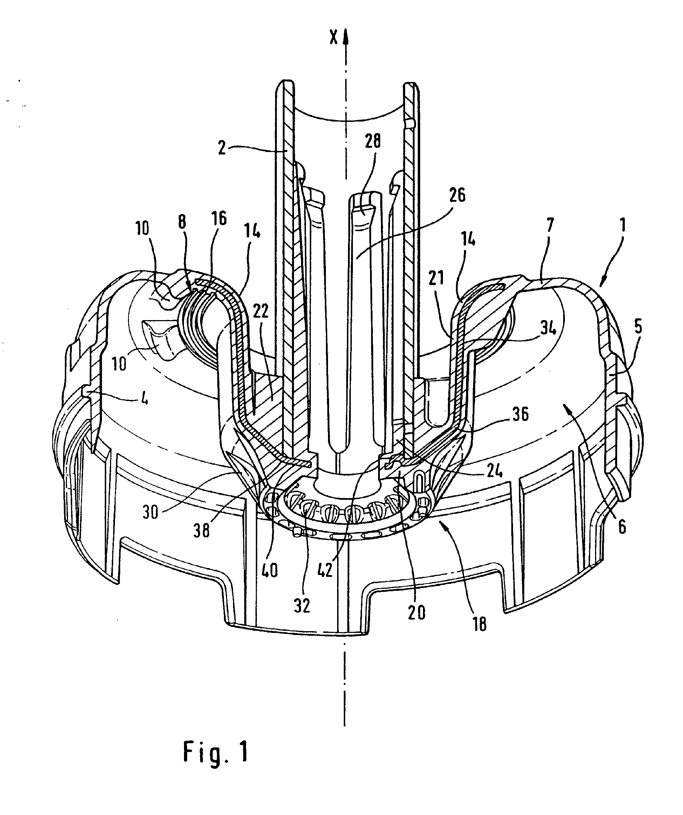

In Fig. 1 ist eine dreidimensionale Schnittansicht einer beispielhaften Ausführungsform eines erfindungsgemäßen Federspeicherkolbens 1 dargestellt. Der aus Kunststoff hergestellte Federspeicherkolben 1 weist eine eingefügte Kolbenstange 2 auf, deren Länge je nach gefordertem Hub angepasst sein kann und die aus einem geeigneten Material, wie z. B. Aluminium oder Zink oder beispielsweise als extrudiertes Teil aus Aluminium hergestellt sein kann. Am äußeren Umfang des Federspeicherkolbens 1 ist ein ringförmig umlaufender nach außen ausgestülpter Steg 4 erkennbar. Der Steg 4 kann als Schulter zur Abstützung eines nicht näher dargestellten Gleitringes dienen oder beispielsweise selbst als Gleitring funktionieren. Ferner können sich gegen den Steg 4 erforderlichenfalls nicht näher dargestellte Dichtungen abstützen. Der radial äußere, umlaufende Abschnitt der Federspeicherkolbenwandung kann insofern auch als Führungsabschnitt 5 bezeichnet werden. Innerhalb des vom Führungsabschnitt 5 radial begrenzten, ringförmigen Hohlraumes 6 des Federspeicherkolbens 1, der in axialer Richtung X wiederum durch den sogenannten Kolbentellerabschnitt 7 begrenzt wird, befindet sich die in Fig. 1 nicht näher dargestellte Speicherfeder. Deren letzte Windung stützt sich gegen den Auflagebereich bzw. die Auflagefläche 8 ab. Zur Ableitung radialer Kräfte der nicht näher dargestellten Speicherfeder sind Höcker oder Schultern bzw. Schulterabschnitte 10 vorgesehen, die in das innere des Federspeicherkolbens 1 hinein ragen, also dem Hohlraum 6 zugewandt sind. Die Auflagefläche 8 ist des weiteren in dieser Ausführungsform profiliert ausgebildet.

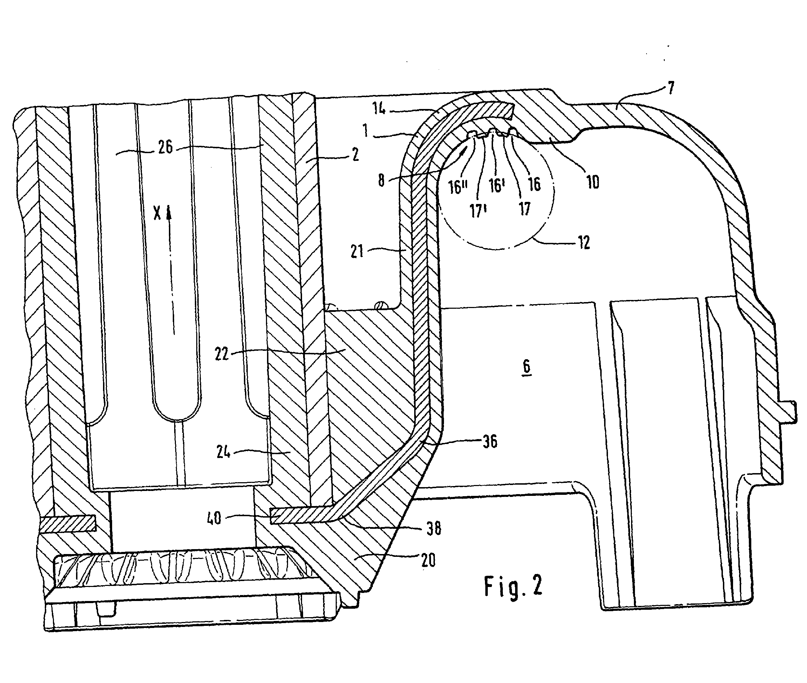

Wie insbesondere aus Fig. 2, einer vergrößerten Detailansicht von Fig. 1, erkennbar ist, liegt die dort im Schnitt gezeigte, letzte Windung der Speicherfeder 12 radial innen an der gebogen verlaufenden Kontur 14 des Federspeicherkolbens 1 an. Zudem liegt die letzte Windung der Speicherfeder 12 radial auswärts an der Schulter 10 an. In axialer Richtung X des Federspeicherkolbens 1 liegt die Speicherfeder 12 formschlüssig an der Innenkontur des Federspeicherkolbens 1 an, wobei die Anlagefläche 8 in diesem Bereich profiliert ist. In der hier dargestellten Ausführungsform weist die Anlagefläche 8 drei ringförmig umlaufende Nuten 16, 16' und 16" auf, zwischen denen sich Stege 17 bzw. 17' befinden, die in die Kontur der anliegenden Speicherfeder 12 hineinragen und vorzugsweise verformbar sind, was eine Anpassung der Anlagefläche 8 an die Kontur der Speicherfeder beim Einlaufen des Federspeicherbremszylinders erlaubt. Auf diese Weise wird sichergestellt, dass die von herkömmlichen Federspeicherkolben bekannten, üblicherweise nicht vollständig vermeidbaren radialen Kräfte der Speicherfeder 12, zumindest so in den Federspeicherkolben 1 abgeleitet werden können, dass keine negativen Auswirkungen auf in radialer Richtung üblicherweise nur geringfügig belastete Dichtungen befürchtet werden müssen, oder dass im Idealfall eine Entstehung dieser radialen Kräfte weitestgehend vermieden wird.

In Fig. 1 ist der einen Kolben bzw. die Kolbenstange 2 aufnehmende, innere Abschnitt des Federspeicherkolbens 1 als Bereich 18 bezeichnet. Dieser weist einen ringförmig umlaufenden Sitz 20 auf, der radial nach außen in die die Speicherfeder umschließende Kolbenwandung übergeht, die vereinzelt auch als Kolbenhemd bezeichnet wird. Deren radial innerer Abschnitt ist mit der Bezugsziffer 21 versehen. Gegen den ringförmigen Sitz 20 stützt sich die Kolbenstange 2 ab. Dabei ist die Kolbenstange 2 von einer ringförmigen Schulter 22 von außen her gehalten. Eine weitere ringförmige Schulter 24 stützt die Kolbenstange 2 von innen ab. An die innere Schulter 24 schließen sich einstückig angeformte Zungen oder Laschen 26 an, die sich in axialer Richtung X erstrecken. Bei der hier dargestellten Ausführungsform sind sechs solcher Laschen 26 vorgesehen. Anstelle dieser Laschen 26 könnte auch eine rohrförmige Verlängerung der ringförmigen Schulter 24 vorgesehen werden. Die Laschen 26 bieten jedoch den Vorteil der Materialersparnis und können eine gewisse federnde Vorspannung erzeugen. Innerhalb des durch die Kolbenstange 2 und die Laschen 26 definierten Hohlraumes kann eine nicht näher dargestellte Lösevorrichtung integriert werden. Diese kann sich dann gegen die Ausnehmungen 28 der Laschen 26 abstützen. Die Ausnehmungen 28 können auch als Widerlager für Spannmittel dienen. Zur Verstärkung des ringförmigen Sitzes 20 weist dieser radial orientierte innere als auch äußere Stützrippen 30 bzw. 32 auf.

Bei der sowohl in Fig. 1 als auch in Fig. 2 (vergrößerter Ausschnitt von Fig. 1) dargestellten Ausführungsform eines beispielhaften erfindungsgemäßen Federspeicherkolbens 1 ist eine Einlage 34 zur Verstärkung des Kolbenhemdes vorgesehen. Die Verstärkung 34 kann aus einem auf Zug besonders gut belastbaren Material, wie beispielsweise Stahl oder dgl. als Stahleinlage hergestellt sein. Hierbei folgt die Einlage 34 der Kontur des Kolbenhemdes. Sie beginnt mit einer gekrümmten Kurvenlinie im Bereich der entsprechenden, gekrümmten Kontur 14 der Wandung des Federspeicherkolbens 1 und verläuft dort anschließend näherungsweise achsparallel zur Längsrichtung bzw. Hauptaxialrichtung des Federspeicherkolbens 1 oder unter einem bestimmten Winkel leicht dazu geneigt und knickt dann in einem ersten Bereich 36 um etwa 45° ab, um in einem weiteren Abschnitt 38 nochmals um etwa 45° abzuwinkeln und in einem ringförmigen Abschnitt 40 zu enden. Die Einlage 34 ist dabei bis auf kleine Teilbereiche fast vollständig von der Wandung des Federspeicherkolbens 1 insbesondere von der Wandung des Kolbenhemdes umschlossen. Herstellungstechnisch wird dies dadurch erreicht, dass die Einlage 34 bei der Herstellung des Federspeicherkolbens 1 mit Kunststoff umspritzt wird. Die Stahleinlage 34 weist im Endbereich 40, in dem sie in der Stütze 20 endet, wenigstens eine nasenartige Ausstülpung oder Schulter 42 auf, die zur Zentrierung mit der Kolbenstange 2 dient. Die Kolbenstange 2 stützt sich im Federspeicherkolben 1 stirnseitig gegen den Endabschnitt 40 der Stahleinlage 34 ab. Eine von der Speicherfeder 12 im Auflagebereich 8 eingeleitete Kraft wird über das Kolbenhemd und die darin integrierte Stahleinlage 34 in den ringförmigen Sitz 20 übertragen und von diesem auf die Kolbenstange 2 weitergeleitet.

Ein Verkanten des Federspeicherkolbens 1 gegenüber der Kolbenstange 2 ist durch die Integration der Kolbenstange 2 innerhalb der ringförmigen Schulter 22 und der zweiten ringförmigen Schulter 24 als auch der Laschen 26 ausgeschlossen. Die äußere Kontur bzw. der Führungsabschnitt 5, der Kolbentellerabschnitt 7 als auch das Kolbenhemd des Federspeicherkolbens 1 sind mit der ringförmigen Schulter 22 und der ringförmigen Schulter 24 als auch den Laschen 26 aus einem Stück in Kunststoff hergestellt, was sowohl in Fig. 1 als auch Fig. 2 durch die Verwendung einer einheitlichen Schraffur versinnbildlicht ist.

Die vorliegende Erfindung schafft damit erstmals einen Federspeicherkolben, der beispielsweise in Spritzgusstechnik aus Kunststoff hergestellt ist. Darüber hinaus ist der erfindungsgemäße Federspeicherkolben im Bereich des Anschlusses zur Kolbenstange so ausgestaltet, dass ein Verkanten des Federspeicherkolbens gegenüber der Kolbenstange ausgeschlossen ist und eine feste Verbindung zwischen Federspeicherkolben und Kolbenstange sichergestellt ist. Zudem weist der erfindungsgemäße Federspeicherkolben weiterhin eine Verstärkungseinlage auf, mittels der deutlich höhere Kräfte bei kleineren Wandungsstärken übertragen werden können als bei herkömmlichen Federspeicherkolben. Nicht zuletzt ist der Sitz bzw. die Anlagefläche im Federspeicherkolben zur Abstützung der Speicherfeder so ausgebildet, daß möglicherweise auftretende radiale Kräfte keinen negativen Einfluss auf die Funktionalität des Federspeicherkolbens haben.

## Patentansprüche

1. Federspeicherkolben (1) für einen Federspeicherbremszylinder, insbesondere von Nutzfahrzeugen, welcher aus Kunststoff hergestellt ist, **dadurch gekennzeichnet, dass** eine Einlage (34) aus Stahl in die Wandung des Federspeicherkolbens (1) eingeformt ist.

2. Federspeicherkolben (1) nach Anspruch 1, **dadurch gekennzeichnet, dass** die Einlage (34) von einem Kolbentellerabschnitt (7), vorzugsweise von einem einer Anlagefläche (8) einer Speicherfeder (12) benachbarten Krafteinleitungsbereich in den Federspeicherkolben (1), bis zu einem in einem ringförmigen Kolbenzentrum (20) angeordneten Kraftüberleitungsbereich vom Federspeicherkolben (1) zu einem Kolben oder einer Kolbenstange (2) reicht.

3. Federspeicherkolben (1) nach Anspruch 1 oder 2, **dadurch gekennzeichnet, dass** die Einlage (34) eine Schulter (42) aufweist, an der das federspeicherkolbenseitige, radial innere Ende des Kolbens oder der Kolbenstange (2) anliegt.

## Claims

1. Spring-loaded piston (1) for a spring-loaded brake cylinder, in particular for commercial vehicles, which is manufactured from plastic, **characterised in that** an insert (34) made from steel is moulded into the wall of the spring-loaded piston (1).

2. Spring-loaded piston (1) as claimed in claim 1, **characterised in that** the insert (34) extends from a piston plate portion (7), preferably from an area where force is introduced into the spring-loaded piston (1) adjacent to a bearing surface (8) of a pre-loaded spring (12), as far as an area in which force is introduced by the spring-loaded piston (1) into a piston or a piston rod (2) disposed in an annular piston centre (20).

3. Spring-loaded piston (1) as claimed in claim 1 or 2, **characterised in that** the insert (34) has a shoulder (42), against which the radially inner end of the piston or piston rod (2) sits at the spring-loaded piston end.

## Revendications

1. Piston (1) à ressort accumulateur pour un cylindre de frein à ressort accumulateur, en particulier de véhicules utilitaires, qui est fabriqué en matière plastique, **caractérisé en ce qu'**une pièce (34) d'insertion en acier est moulée dans la paroi du piston (1) à ressort accumulateur.

2. Piston (1) à ressort accumulateur suivant la revendication 1, **caractérisé en ce que** la pièce (34) d'insertion s'étend depuis une partie (7) de cuvette de piston, de préférence depuis une région, voisine d'une surface (8) de contact d'un ressort (12) accumulateur, d'introduction de la force dans le piston (1) à ressort accumulateur, jusqu'à une région, disposée dans un centre (20) annulaire de piston, de transmission de la force du piston (1) à ressort accumulateur à un piston ou à une tige (2) de piston.

3. Piston (1) à ressort accumulateur suivant la revendication 1 ou 2, **caractérisé en ce que** la pièce (34) d'insertion comporte un épaulement (42) contre lequel s'applique l'extrémité radialement intérieure, tournée vers le piston à ressort accumulateur, du piston ou de la tige (2) de piston.
